# EUROPÄISCHE PATENTSCHRIFT

(11) **EP 4 320 667 B1**
(45) Veröffentlichungstag und Bekanntmachung des Hinweises auf die Patenterteilung: **26.02.2025**
(21) Anmeldenummer: 23735722.3
(22) Anmeldetag: 27.06.2023
(51) Int. Cl.: H01M 10/04, H01G 11/86, H01G 13/00, H01G 11/84, H01G 13/02

(54) **VERFAHREN UND VORRICHTUNG ZUM FERTIGEN EINES ELEKTRODENSTAPELS**
METHOD AND DEVICE FOR PRODUCING AN ELECTRODE STACK
PROCÉDÉ ET DISPOSITIF DE FABRICATION D'UN EMPILEMENT D'ÉLECTRODES

(30) Priorität: 29.06.2022 DE 102022116275
(43) Veröffentlichungstag der Anmeldung: 14.02.2024
(73) Patentinhaber: Technische Universität Braunschweig, 38106 Braunschweig (DE)
(72) Erfinder: FRÖHLICH, Arian, 31559 Haste (DE); HAUS, Jan Niklas, 38124 Braunschweig (DE)
(74) Vertreter: WSL Patentanwälte Partnerschaft mbB
(86) Internationale Anmeldenummer: PCT/EP2023/067475
(87) Internationale Veröffentlichungsnummer: WO 2024/003047

(56) Entgegenhaltungen:
- JP-A- 2016 219 267
- US-B2- 7 611 549

## Beschreibung

Die vorliegende Erfindung betrifft ein Verfahren und eine Vorrichtung zum Fertigen eines Elektrodenstapels.

Bei der Herstellung von Energiespeichern und Energiewandlern, insbesondere von Batterien, Brennstoffzellen und Kondensatoren, werden im Zuge der sogenannten Stapelbildung mehrere folienförmige Elektroden zu einem Elektrodenstapel aufgeschichtet. Die einzelnen Elektroden sind dabei voneinander isoliert. Die Elektroden können dabei aus Magazinen vereinzelt und von Handhabungssystemen alternierend auf dem Elektrodenstapel abgelegt werden.

Verfahren und Vorrichtungen zum Herstellen von Elektrodenstapeln sind beispielsweise aus der US 2021/234186 A1, der WO 2015/079365 A1 und der US 7,611,549 B2 bekannt.

Die präzise Ablage der einzelnen Elektroden sowohl hinsichtlich ihrer Position als auch ihrer Orientierung ist ein für die hergestellten Energiespeicher und Energiewandler qualitätsentscheidendes Kriterium. Zielgröße ist eine Genauigkeit von unter 0,1 mm. Die Ausrichtung der Elektroden in die angestrebte Lage (Soll-Lage) ist bislang ein zeitaufwendiger und kostenintensiver Teilschritt bei der Stapelbildung. So ist es bisher erforderlich, die Ist-Lage einer Elektrode präzise zu erfassen, damit die für die Soll-Lage notwendigen Änderungen der Position und Orientierung ermittelt und anschließend vorgenommen werden können. Zum Erfassen der Ist-Lage kann eine präzise Bildverarbeitung eingesetzt werden, was jedoch mit hohen Kosten verbunden ist.

Zudem können Handhabungssysteme (Roboter mit Greifer), welche die Elektroden beispielsweise mittels Vakuum halten, zu Beschädigungen an den Elektroden führen, was nachteilig ist.

Ist die Soll-Lage der Elektrode unter Berücksichtigung erlaubter Toleranzen erreicht, so wird im Stand der Technik der gesamte bisher abgelegte Elektrodenstapel mechanisch fixiert, bevor die nächste Lage auf dem bisher bestehenden Elektrodenstapel abgelegt wird. Auch diese mechanische Fixierung ist zeitaufwendig und kann Ursache von Beschädigungen der einzelnen Elektroden sein.

Es war daher Aufgabe der Erfindung, die Kosten und den Zeitaufwand bei der Fertigung von Elektrodenstapeln zu verringern sowie Beschädigungen der Elektroden bei der Stapelbildung zu vermeiden.

Diese Aufgabe wird durch ein Verfahren zum Fertigen eines Elektrodenstapels für einen Energiespeicher oder Energiewandler, insbesondere für eine Batterie, für eine Brennstoffzelle oder für einen Kondensator, nach Anspruch 1 gelöst, bei dem eine Mehrzahl von folienförmigen, zumindest teilweise elektrisch leitfähigen Lagen zu einem Elektrodenstapel aufgeschichtet wird, wobei zunächst eine erste Lage auf einer Ablagefläche und jede weitere Lage auf der zuvor abgelegten Lage, insbesondere der unmittelbar zuvor abgelegten Lage, platziert wird und wobei für eine Zeitspanne t vor, während und/oder nach dem Ablegen mindestens einer Lage ein die Lage zentrierendes, elektromagnetisches Wechselfeld erzeugt wird. Unter einem Zentrieren wird insbesondere das Bewegen der Lage in eine vorgegebene Position und Orientierung auf der Ablagefläche und/oder das Halten der Lage in der vorgegebenen Position und Orientierung auf der Ablagefläche verstanden. Die Zentrierung erfolgt insbesondere in einer zweidimensionalen Ebene parallel zur Ablagefläche.

Das elektromagnetische Wechselfeld induziert in den zumindest teilweise elektrisch leitfähigen Lagen Wirbelströme, die ihrerseits ein Magnetfeld erzeugen, welches dem elektromagnetischen Wechselfeld entgegengerichtet ist. Dadurch kommt es zu einer abstoßenden Kraftwirkung zwischen einem das elektromagnetische Wechselfeld erzeugenden Element, beispielsweise einer Spule, und den Lagen. Die Erfinder haben herausgefunden, dass diese abstoßenden Kräfte hervorragend zur Zentrierung der Lagen verwendet werden können. Es hat sich gezeigt, dass durch diese Art der Zentrierung eine sehr hohe Präzision, also sehr geringe Abweichungen zwischen Soll-Lage und Ist-Lage, sowohl hinsichtlich der Position als auch hinsichtlich der Orientierung erreicht werden kann. Die auf die zumindest teilweise elektrisch leitfähigen Lagen einwirkenden Kräfte sind dabei nicht mechanischen Ursprungs, sodass die Gefahr einer Beschädigung der Lagen erheblich verringert ist. Zudem erfolgt die Zentrierung außerordentlich schnell, viel schneller als eine Zentrierung mit einem Handhabungssystem (Greifer) möglich wäre.

Das erfindungsgemäße Verfahren eignet sich besonders zur Zentrierung von rechteckigen Lagen und insbesondere von Lagen mit Kantenlängen von 5 mm bis 600 mm sowie einer Dicke zwischen 5 µm und 1000 µm. Lagen dieser Dimensionen lassen sich präzise durch das erfindungsgemäße Verfahren zentrieren. Doch auch zur Zentrierung von Lagen anderer Form ist das erfindungsgemäße Verfahren sehr gut geeignet, beispielsweise zur Zentrierung von kreisförmigen oder ovalen Lagen, insbesondere solche mit Durchmessern zwischen 5 mm und 600 mm.

Bei den abgelegten Lagen kann es sich beispielsweise um (Batterie-)Elektroden mit integrierten stromleitenden Stromsammlerschichten handeln. Zu diesen Elektroden zählen Kathoden (z. B. Aluminium-Stromsammler), Anoden (z. B. Kupfer-Stromsammler) sowie Verbünde aus Anoden mit Separator- oder Elektrolytschichten und Kathoden mit Separator- oder Elektrolytschichten. Das Verfahren eignet sich zudem zur Stapelbildung von (Batterie-)Elektroden, in denen das Aktivmaterial selbst als Stromsammler dient (z. B. reines Lithium-Metall als Lithium-Metall-Anode). Eine unmittelbar zuvor abgelegte Lage kann auch eine reine Separatorlage sein. Separatorlagen sind nicht leitend und werden daher nicht von dem elektromagnetischen Wechselfeld beeinflusst. Es ist im Rahmen der vorliegenden Erfindung möglich, Separatorlagen durch eine zusätzliche Vorrichtung, beispielsweise einem Vakuumgreifer, zwischen zwei zumindest teilweise elektrisch leitfähigen Lagen abzulegen. Wird das elektromagnetische Wechselfeld anschließend aktiviert, so werden nur die zumindest teilweise elektrisch leitfähigen Lagen zentriert.

Oberhalb der Ablagefläche befindet sich ein Ablageraum. Der Ablageraum ist der Raum, in dem die Lagen im Zuge der Fertigung des Elektrodenstapels angeordnet werden, um den Elektrodenstapel zu bilden. Der Ablageraum weist also bevorzugt eine Höhe auf, die an die maximale Höhe des Elektrodenstapels angepasst ist und dieser insbesondere entspricht. Die Lagen werden bei der Fertigung von einem Bereich außerhalb des Ablageraums in den Ablageraum hinein bewegt und dann auf der Ablagefläche oder der zuvor abgelegten Lage platziert (abgelegt). Das elektromagnetische Wechselfeld weist einen Wirkungsraum auf, der bevorzugt zumindest den Ablageraum umfasst. Unter dem Wirkungsraum des elektromagnetischen Wechselfelds wird insbesondere der Raum verstanden, in dem das elektromagnetische Wechselfeld eine Feldstärke aufweist, die groß genug ist, um auf die abzulegende oder bereits abgelegte Lage eine Kraft auszuüben, die die Lage in Bewegung versetzen kann, also insbesondere Widerstandskräfte zwischen Lage und Prozessumgebung während der Ablage (z. B. Luftwiderstandskräfte, elektrostatische Kräfte) und/oder Anhaftungs- und Reibungskräfte zwischen der Lage und der Ablagefläche oder zwischen der Lage und einer zuvor abgelegten Lage überwinden kann. Der Wirkungsraum eines von einer Spule erzeugten elektromagnetischen Wechselfelds erstreckt sich insbesondere im Inneren der Spule. Der Wirkungsraum kann auch als Einflussbereich des elektromagnetischen Wechselfelds bezeichnet werden.

Der Wirkungsraum lässt sich beispielsweise durch die Form der Spule, das Material der Spule, die Anzahl der Windungen der Spule, den Durchmesser der Spule und die Stromstärke des durch die Spule fließenden Stroms beeinflussen. Darüber hinaus gibt es noch viele weitere Faktoren, welche die Größe und Form des Wirkungsraums beeinflussen. Es ist vorteilhaft, den Wirkungsraum des elektromagnetischen Wechselfelds an die Form und Größe der Elektroden anzupassen, um eine möglichst gute Zentrierwirkung zu erzielen.

Der Wirkungsraum des elektromagnetischen Wechselfelds ist insbesondere derart gewählt, dass das elektromagnetische Wechselfeld aus mindestens drei Richtungen, die parallel zur Ablagefläche verlaufen, Kräfte auf die Lage ausübt und dadurch die Lage zentriert. Die Kräfte ergänzen sich dabei so, dass die Position und Orientierung der Lage in der Ebene parallel zur Ablagefläche festgelegt werden, die Lage sich also nicht mehr bewegen kann. Durch die mindestens drei Kräfte ist die Position und Orientierung der Lage in der Ebene bestimmt.

Bei vorteilhaften Weiterbildungen schließt der Wirkungsraum des elektromagnetischen Wechselfelds die abgelegte Lage oder deren umlaufenden Rand teilweise ein und ragt an mindestens drei Stellen über den Rand der Lage nach außen hinaus. Die Erfinder haben im Zuge ihrer Entwicklung festgestellt, dass die Zentrierung besonders gut erfolgt, wenn das elektromagnetische Wechselfeld auf den Rand der abgelegten Lage einwirkt. Daher kann der Wirkungsraum des elektromagnetischen Wechselfelds die abgelegte Lage oder deren umlaufenden Rand alternativ auch vollständig einschließen. In diesem Fall wirkt das elektromagnetische Wechselfeld von außen auf den gesamten Rand der Lage ein und bewirkt somit Kräfte aus allen Richtungen parallel zur Ablagefläche, wodurch eine außerordentlich gute Zentrierung erreicht wird.

Die Erzeugung des Wechselstroms kann in zwei Varianten (Alternativen) erfolgen. In der ersten Variante werden die angestrebte Frequenz und Schwingungsform (vorzugsweise Sinusschwingung oder Rechteckschwingung) des Wechselstroms über einen Signalgenerator (Wechselstromgenerator) erzeugt. Die Amplitude dieses Signals wird in einem angeschlossenen Leistungsverstärker erhöht und in die Spule eingespeist. Der Wechselstrom erzeugt in der Spule das elektromagnetische Wechselfeld. In der zweiten Variante wird die Spule durch einen Kondensator zu einem Schwingkreis und dieser Schwingkreis durch eine Ladeschaltung mit Gleichstromquelle erweitert. Die Ladeschaltung mit Gleichstromquelle lädt den Kondensator kontinuierlich auf. In einer ersten zu bevorzugenden Ausprägung dieser Variante wird der Kondensator mittels Schalter zwischen Kondensator und Spule pulsartig über die Spule entladen. Der sich einstellende hohe Entladestrom klingt in der Eigenfrequenz des Schwingkreises aus Kondensator und Spule ab, bis der Kondensator mittels Schalter von der Spule getrennt und durch die Ladeschaltung erneut geladen wird. Der pulsartig hohe Entladestrom erzeugt in der Spule ein starkes elektromagnetisches Wechselfeld. In einer zweiten zu bevorzugenden Ausprägung dieser Variante sind der Kondensator und die Spule dauerhaft elektrisch miteinander verbunden und über die Ladeschaltung versorgt, sodass sich ein kontinuierlich in der Eigenfrequenz des Schwingkreises schwingender Wechselstrom einstellt, der in der Spule ein elektromagnetisches Wechselfeld erzeugt.

Das elektromagnetische Wechselfeld ist bei vorteilhaften Weiterbildungen hinsichtlich seines Wirkungsraums an die Form und/oder Größe der abzulegenden Lage angepasst. Wird beispielsweise eine rechteckige Lage abgelegt, so ist der Wirkungsraum des elektromagnetischen Wechselfelds bevorzugt rechteckig oder im Wesentlichen rechteckig, insbesondere weist der Wirkungsraum in einer Draufsicht die Form eines Rechtecks mit abgerundeten Ecken auf. Praktisch kann das erreicht werden, indem das elektromagnetische Wechselfeld von einer Spule erzeugt wird, die in Form und/oder Größe an die Lage angepasst ist. Ferner bevorzugt sind die Ausdehnungen des Wirkungsraums des elektromagnetischen Wechselfelds und der Lage in Richtungen parallel zur Ablagefläche identisch oder die Ausdehnung des Wirkungsraums des elektromagnetischen Wechselfelds ist geringfügig größer, insbesondere um bis zu 10 %, besonders bevorzugt bis 5 %. Die Erfinder haben erkannt, dass ein noch größerer Wirkungsraum keinen Vorteil bringt, sondern eher dazu führt, dass die auf die Lage wirkenden Kräfte geringer ausfallen, die Zentrierwirkung also abnimmt. Ein Wirkungsraum des elektromagnetischen Wechselfelds, der in Richtungen parallel zur Ablagefläche geringfügig kleiner ist als die Lage, führt ebenfalls zu einer geringeren Zentrierwirkung. Bevorzugt wird daher eine Spule gewählt, deren Innenraum in radialer Richtung nur geringfügig größer ist als die Ausdehnung der Lagen.

In der Vertikalen, also insbesondere senkrecht zur Ablagefläche, ist das elektromagnetische Wechselfeld insbesondere derart ausgelegt, dass sein Wirkungsraum auch bereits abgelegte Lagen umfasst. Das wird insbesondere dann erreicht, wenn der Wirkungsraum den Ablageraum vollständig umfasst. Dadurch werden auch die bereits abgelegten Lagen (erneut) durch das elektromagnetische Wechselfeld zentriert. Alternativ kann das elektromagnetische Wechselfeld auch nur nach dem Ablegen der letzten Lage aktiviert werden, woraufhin alle Elektroden im Stapel zentriert werden.

Wie bereits oben erwähnt, werden im Stand der Technik bereits abgelegte Lagen mittels eines Niederhalters gehalten. Dies kann zu mechanischen Beschädigungen führen. Bei vorteilhaften Weiterbildungen der Erfindung ist vorgesehen, dass der Wirkungsraum des elektromagnetischen Wechselfelds ein unterhalb des Ablageraums angeordnetes, zumindest teilweise elektrisch leitfähiges Ablageteil zumindest teilweise, insbesondere vollständig umfasst. Dadurch werden in dem Ablageteil ebenfalls Wirbelströme induziert. Diese Wirbelströme erzeugen ein eigenes Magnetfeld. Wie oben beschrieben wurde, wird auch in den Lagen durch die dort induzierten Wirbelströme ein Magnetfeld erzeugt. Die Magnetfelder der Lagen und des Ablageteils sind derart ausgerichtet, dass sich das Ablageteil und die Lagen anziehen. Auf diese Weise werden die Lagen nicht nur zentriert, sondern ferner niedergehalten. Bei dieser Art des Niederhaltens kommt es zu keiner mechanischen Beanspruchung der Lagen durch einen Greifer oder dergleichen, weshalb Beschädigungen der Lagen weitgehend vermieden werden. Befinden sich zwischen abgelegten zumindest teilweise elektrisch leitfähigen Lagen nicht leitende Separatorlagen, so werden auch die Separatorlagen niedergehalten, da sie zwischen den zumindest teilweise elektrisch leitfähigen Lagen und dem Ablageteil gehalten werden.

Unter elektrisch leitfähig werden insbesondere Materialien verstanden, die eine Leitfähigkeit von > 10⁶ S/m aufweisen.

Die Zeitspanne t, während der das elektromagnetische Wechselfeld erzeugt (betrieben) wird, also während der das elektromagnetische Wechselfeld wirkt, beträgt bevorzugt zwischen 0,005 und 20 Sekunden, insbesondere zwischen 0,005 und 1 Sekunde. 20 Sekunden reichen aus, um eine Lage in den Ablageraum zu transportieren und die Lage zusätzlich zu zentrieren. Eine Zeitspanne von 0,005 Sekunden reicht hingegen für die alleinige Zentrierung aus. Zwischen zwei Ablage- und Zentriervorgängen wird bevorzugt kein elektromagnetisches Wechselfeld erzeugt, wodurch der Energieaufwand begrenzt wird.

Durch die Induktion von Wirbelströmen in der Lage und gegebenenfalls dem Ablageteil wird ein Teil der aufgewendeten (elektrischen) Energie in Wärmeenergie (Abwärme) umgewandelt. Die Erfinder haben erkannt, dass es vorteilhaft ist, die Menge der Abwärme zu begrenzen, damit es zu keiner Beschädigung der Lagen kommt. Auch zu diesem Zweck ist es von Vorteil, wenn wie oben beschrieben zwischen zwei Ablage- und Zentriervorgängen kein elektromagnetisches Wechselfeld erzeugt. Bei vorteilhaften Weiterbildungen wird das elektromagnetische Wechselfeld zusätzlich oder alternativ im Pulsbetrieb betrieben, wobei das elektromagnetische Wechselfeld während der Zeitspanne t wechselweise aktiviert und deaktiviert wird. Die Aktivzeitspanne tₐₖₜᵢᵥ, innerhalb der das elektromagnetische Wechselfeld aktiv ist, beträgt vorzugsweise zwischen 0,001 und 10 Sekunden, insbesondere zwischen 0,001 und 0,5 Sekunden. Zwischen zwei Aktivzeitspannen tₐₖₜᵢᵥ liegt jeweils eine Pausenzeitspanne t_{Pause}, die zwischen 0,001 und 10 Sekunden, insbesondere zwischen 0,001 und 0,5 Sekunden beträgt. Es hat sich zudem herausgestellt, dass es von großem Vorteil ist, wenn die Aktivzeitspanne tₐₖₜᵢᵥ wesentlich kleiner ist als die Pausenzeitspanne t_{Pause}, insbesondere um einen Faktor 2 bis 10. Die kleinere Aktivzeitspanne reicht aus, um die Lage zu zentrieren, da das Zentrieren der Lage äußerst schnell vonstattengeht. Die größere Pausenzeitspanne bewirkt, dass die Wärmeenergie in die Umgebung der Vorrichtung abgegeben werden kann und sich die Lagen langfristig nicht zu stark aufheizen.

Das elektromagnetische Wechselfeld weist bevorzugt eine Frequenz größer 1 kHz, insbesondere größer 10 kHz und ferner bevorzugt kleiner 100 kHz auf. Unterhalb von 1 kHz sind die entstehenden Wirbelströme oftmals schwach und die Zentrierwirkung des erfindungsgemäßen Verfahrens kaum vorhanden. Oberhalb von 10 kHz sind die aus den Wirbelströmen entstehenden Magnetfelder ausreichend stark, um die Anziehungskräfte zwischen den einzelnen Lagen zu überwinden und die Lagen zu zentrieren. Oberhalb von 100 kHz ist kaum eine Verbesserung der Zentrierwirkung mehr festzustellen. Außerdem entsteht bei so hohen Frequenzen viel Abwärme, was ebenfalls nachteilig ist.

Bei vorteilhaften Weiterbildungen wird die Ablagefläche von einem Gehäuse einer Elektrodenzelle definiert. Als Elektrodenzelle wird der Verbund aus Elektrodenstapel und Gehäuse bezeichnet. Bisher war es üblich, dass zunächst ein Elektrodenstapel unabhängig von einem Gehäuse gefertigt und der Elektrodenstapel dann in das Gehäuse verbracht wird, wodurch eine Elektrodenzelle gefertigt wird. Aus mehreren Elektrodenzellen wird dann beispielsweise eine Batterie gefertigt. Üblicherweise weist jeder Energiespeicher oder -wandler eine Mehrzahl von miteinander verschalteten Elektrodenzellen auf. Mit der Erfindung ist es möglich, den Elektrodenstapel direkt in dem Gehäuse zu fertigen, wodurch ein Prozessschritt, das Überführen eines gefertigten Elektrodenstapels in das Gehäuse, entfällt. Alternativ kann die Ablagefläche von dem Ablageteil selbst definiert werden, wobei sie dann eine Oberfläche des Ablageteils ist.

Die Aufgabe der Erfindung wird auch durch eine Vorrichtung zum Fertigen eines Elektrodenstapels aus einer Mehrzahl von folienförmigen, zumindest teilweise elektrisch leitfähigen Lagen nach Anspruch 7 gelöst, die ein eine Ablagefläche bereitstellendes Ablageteil und einen Wechselstromgenerator aufweist, der mindestens eine Spule sowie eine Stromquelle umfasst, wobei die mindestens eine Spule derart relativ zu der Ablagefläche angeordnet ist, dass sie bei aktivierter Stromquelle zumindest in einem Ablageraum oberhalb der Ablagefläche ein die Lagen relativ zu der Ablagefläche zentrierendes, elektromagnetisches Wechselfeld erzeugt.

Bei der erfindungsgemäßen Vorrichtung wird durch die Spule das die Lagen zentrierende, elektromagnetische Wechselfeld in dem Ablageraum erzeugt. Werden Lagen in dem Ablageraum und insbesondere auf der Ablagefläche oder auf einer zuvor abgelegten Lage abgelegt, so bewirkt das elektromagnetische Wechselfeld die oben beschriebene Zentrierung. Auf diese Weise stellen sich die oben beschriebenen Vorteile ebenso bei der erfindungsgemäßen Vorrichtung ein.

Die erfindungsgemäße Vorrichtung ist bevorzugt eingerichtet, das erfindungsgemäße Verfahren auszuführen. Das erfindungsgemäße Verfahren wird bevorzugt unter Verwendung der erfindungsgemäßen Vorrichtung durchgeführt.

Der Wirkungsraum des elektromagnetischen Wechselfelds wird insbesondere durch die Form der Spule und ihre Anordnung im Raum definiert.

Wie oben beschrieben, ist es von Vorteil, wenn die Lagen nach dem Ablegen nicht nur zentriert, sondern auch niedergehalten werden. Bei vorteilhaften Weiterbildungen ist daher vorgesehen, dass das Ablageteil zumindest teilweise elektrisch leitfähig ist und dass die Spule derart angeordnet ist, dass das elektromagnetische Wechselfeld das Ablageteil zumindest teilweise einschließt. Auf diese Weise werden durch das elektromagnetische Wechselfeld auch in dem Ablageteil Wirbelströme induziert, wobei diese Wirbelströme ein eigenes Magnetfeld erzeugen. Dieses Magnetfeld wirkt derart mit dem Magnetfeld der Wirbelströme in den Lagen zusammen, dass die Lagen niedergehalten werden.

Alternativ ist vorgesehen, dass das Ablageteil nicht elektrisch leitfähig ist, wobei unterhalb des Ablageteils ein Magnet angeordnet ist, insbesondere ein Elektromagnet und/oder ein Permanentmagnet. Der Magnet ist eingerichtet, auf dem Ablageteil abgelegte Lagen niederzuhalten. Der Magnet ist derart ausgebildet, dass er mit dem Magnetfeld, welches durch die Wirbelströme in den Lagen hervorgerufen wird, derart wechselwirkt, dass die Lagen niedergehalten werden, dass also eine Kraft ausgeübt wird, welche die Lagen auf das Ablageteil drückt. Auch bei dieser Art des Niederhaltens kommt es zu keiner mechanischen Beeinträchtigung der Lagen durch einen mechanischen Niederhalter, wodurch Beschädigungen vermieden werden.

Ein Material ist insbesondere dann nicht elektrisch leitfähig, wenn es eine Leitfähigkeit von < 10⁻⁸ S/m aufweist.

Die Ablagefläche entspricht in Form und Größe bevorzugt den abzulegenden Lagen (in Draufsicht, also in Richtungen senkrecht zur Hochachse H). Die Ablagefläche kann geringfügig größer sein, um Toleranzen beim Ablegen der Lage vor dem Zentriervorgang berücksichtigen zu können. Die Ablagefläche kann der oberen Fläche des Ablageteils entsprechen. Die Form kann auch geringfügig abweichen. So kann bei einer rechteckigen Lage die Ablagefläche auch die Form eines Rechtecks mit abgerundeten Ecken aufweisen.

Die Erfinder haben ermittelt, dass es von Vorteil ist, wenn die Spule oder die Spulen nahe an den zu zentrierenden Lagen angeordnet sind. Bei vorteilhaften Weiterbildungen der erfindungsgemäßen Vorrichtung ist daher vorgesehen, dass die Spule auf Höhe des Ablageraums, der Ablagefläche und/oder des Ablageteils entlang einer geschlossenen Kontur um eine senkrecht zur Ablagefläche verlaufende Hochachse H verläuft oder dass mehrere Spulen vorgesehen sind (Spulenanordnung), wobei die Spulen entlang einer geschlossenen Kontur um eine senkrecht zur Ablagefläche verlaufende Hochachse H gleichmäßig verteilt sind. Mit beiden Alternativen kann ein elektromagnetisches Wechselfeld erzeugt werden, das die Lagen auf der Ablagefläche zentriert. Eine einzelne Spule vereinfacht den Aufbau der Vorrichtung, wohingegen die Vorrichtung mit einer Mehrzahl von Spulen an komplexe Formen der Lagen angepasst werden kann.

Es ist ferner möglich, zusätzlich zu einer einzelnen, umlaufenden Spule eine weitere Spule, die beispielsweise unterhalb des Ablageteils angeordnet ist, vorzusehen. Auf diese Weise kann die Zentrierwirkung ebenfalls verbessert werden.

Die geschlossene Kontur ist bevorzugt an die Form und Größe der Lagen, insbesondere ihres Randes, angepasst und insbesondere rechteckig oder im Wesentlichen rechteckig. Auf diese Weise wird das elektromagnetische Wechselfeld in unmittelbarer Nähe zu dem umlaufenden Rand der Lagen erzeugt, was die Zentrierwirkung des elektromagnetischen Wechselfelds verbessert. Mit der erfindungsgemäßen Vorrichtung können prinzipiell Elektroden verschiedenster Form und Größe zentriert werden. Die Erfinder haben erkannt, dass es von Vorteil ist, die Spule oder Spulenanordnung an die jeweils abzulegenden Lagen anzupassen. Oftmals werden rechteckige Elektroden verwendet, weshalb die Kontur ebenfalls bevorzugt rechteckig oder im Wesentlichen rechteckig ist und insbesondere entlang eines Rechtecks mit abgerundeten Ecken verläuft.

Die Spule weist bevorzugt mindestens fünf, insbesondere mindestens 15 Windungen auf. Es hat sich gezeigt, dass eine Spule mit mehr als fünf Windungen zu einer guten Zentrierwirkung führt. Oberhalb von mindestens 15 Windungen ist die Zentrierwirkung noch besser, wobei die entstehende Wärmeenergie weiterhin in einem akzeptablen Rahmen bleibt. Bevorzugt weist die Spule weniger als 30 Windungen auf, da bei einer solch hohen Anzahl von Windungen viel Abwärme entsteht, welche die Lagen beschädigen kann.

Die Spule bzw. die Spulen sind an eine Wechselstromquelle angeschlossen, wobei die Wechselstromquelle Wechselstrom mit einer Stromstärke von bevorzugt mindestens 2 A, insbesondere größer 6 A und bevorzugt kleiner 100 A sowie eine Frequenz von bevorzugt größer 1 kHz, insbesondere größer 10 kHz und bevorzugt kleiner 100 kHz bereitstellt.

Die Intensität und die daraus resultierende Zentrierwirkung des elektromagnetischen Wechselfelds werden maßgeblich durch die Frequenz und die Stromstärke des erzeugenden Wechselstroms beeinflusst. Sowohl mit steigender Frequenz als auch mit zunehmender Stromstärke des erzeugenden Wechselstroms nimmt die Intensität des elektromagnetischen Wechselfelds zu. Jedoch stehen die Frequenz und Stromstärke des Wechselstroms aufgrund der Induktivität der Spule in einer gegenläufigen Wechselbeziehung, sodass hohe Frequenzen eine Verringerung der Stromstärke des Wechselstroms verursachen.

Die Erfinder haben überraschenderweise festgestellt, dass auch unterhalb einer Frequenz von 1 kHz eine ausreichende Zentrierwirkung erzeugt werden kann, wenn die Stromstärke ausreichend groß gewählt wird. Dieses Vorgehen hat sich bis zu einer Untergrenze von 100 Hz bewährt. Die Stromstärke des elektromagnetischen Wechselfelds kann daher bei bevorzugten Ausführungsformen bis 100 kA betragen. Als besonders vorteilhaft hat sich daher einerseits ein elektromagnetisches Wechselfeld mit einer Frequenz zwischen 100 Hz und 1 kHz und einer Stromstärke zwischen 100 A und 1 kA und andererseits ein elektromagnetisches Wechselfeld mit einer Frequenz zwischen 1 kHz und 100 kHz und einer Stromstärke zwischen 2 A und 100 A herausgestellt. In beiden Fällen bewirkt die jeweilige Kombination der Parameter eine besonders gute Zentrierwirkung bei vergleichsweise geringem Wärmeeintrag.

Eine hohe Frequenz und gleichzeitig geringe Stromstärke des erzeugenden Wechselstroms werden vorzugsweise mit der ersten Variante zur Erzeugung des Wechselstroms mittels Signalgenerator und Leistungsverstärker oder mit der zweiten Ausprägung der zweiten Variante mittels kontinuierlichem Schwingkreis ausgebildet. Eine hohe Stromstärke und gleichzeitig geringe Frequenz des erzeugenden Wechselstroms werden vorzugsweise mit der ersten Ausprägung der zweiten Variante zur Erzeugung des Wechselstroms mittels pulsartig geschalteter Kondensatorentladung im Schwingkreis ausgebildet.

Bei vorteilhaften Weiterbildungen ist radial außerhalb des Ablageteils eine, insbesondere umlaufende, Bündelungseinrichtung zum Bündeln des elektromagnetischen Wechselfelds vorgesehen, wobei die Bündelungseinrichtung zumindest teilweise aus einem Material mit hoher Permeabilität besteht. Die Bündelungseinrichtung bewirkt eine scharfe Begrenzung der angrenzenden Magnetfelder, wodurch die Zentrierwirkung weiter verbessert wird. Besonders bevorzugt befindet sich die Bündelungseinrichtung in radialer Richtung zwischen dem Ablageteil und der entlang der Kontur um das Ablageteil verlaufenden Spule(n).

Das Material mit hoher Permeabilität weist bevorzugt eine Permeabilität von µᵣ > 50, insbesondere von µᵣ > 10.000 auf. Ein Material mit hoher Permeabilität ist Mu-Metall (NiFe). Die Verwendung von Mu-Metall hat sich als besonders vorteilhaft erwiesen, da sie eine besonders scharfe Begrenzung der angrenzenden Magnetfelder bewirkt.

Bei vorteilhaften Weiterbildungen ist die Bündelungseinrichtung segmentiert. Dadurch wird der Aufbau der Bündelungseinrichtung vereinfacht, da die Bündelungseinrichtung aus mehreren gleichartigen Teilen zusammengesetzt werden kann.

Die Bündelungseinrichtung ist bevorzugt an die Form und Größe der abzulegenden Lagen angepasst und verläuft insbesondere entlang einer rechteckigen oder im Wesentlichen rechteckigen Kontur. Diese Anpassung bewirkt eine besonders gute Zentrierung.

Bei vorteilhaften Weiterbildungen ist unterhalb des Ablageteils ein Verstärker aus einem Material mit hoher Permeabilität, beispielsweise Mu-Metall, vorgesehen. Der Verstärker bewirkt eine Verstärkung und Fokussierung des elektromagnetischen Wechselfelds, wodurch die Zentrierwirkung erheblich verbessert wird. Die auf die Lagen wirkenden Kräfte sind dann grö-βer, wodurch auch starke Anhaftungskräfte zwischen den Lagen überwunden werden können.

Der Verstärker ist bevorzugt in radialer Richtung von der Bündelungseinrichtung umschlossen. Dadurch begünstigen sich die positiven Effekte des Verstärkers und der Bündelungseinrichtung und sorgen für ein starkes und fokussiertes elektromagnetisches Wechselfeld.

Der Verstärker kann sich durch die entstehende Abwärme aufheizen. Daher ist bei vorteilhaften Weiterbildungen vorgesehen, dass der Verstärker eine Kühlstruktur, insbesondere Kühlbohrungen und/oder Kühlnuten, aufweist und/oder dass die erfindungsgemäße Vorrichtung eine Kühlungseinrichtung für den Verstärker aufweist. Die Kühlungseinrichtung kann ein Kühlmittel umfassen, welches zu dem Verstärker transportiert wird und Wärmeenergie aufnehmen kann. Das Kühlmittel kann beispielsweise Luft sein.

Auch das Ablageteil kann eine Kühlstruktur umfassen und/oder durch eine Kühlungseinrichtung gekühlt werden.

Bei vorteilhaften Weiterbildungen ist der Verstärker segmentiert, besteht also aus mehreren Teilen. Auf diese Weise können insbesondere parasitäre Wirbelströme in dem Verstärker vermieden werden, wodurch eine reproduzierbare Zentrierung der Lagen ermöglicht wird.

Der Verstärker ist bevorzugt an die Form und Größe der Lagen angepasst und insbesondere in Draufsicht rechteckig oder im Wesentlichen rechteckig. Dadurch wird das elektromagnetische Wechselfeld noch besser an die Lagen angepasst, wodurch die Zentrierung verbessert wird.

In Batteriezellen unterscheiden sich häufig die geometrischen Abmessungen von Anoden und Kathoden, wobei die Anoden in der Regel umlaufend größer als die Kathoden ausgebildet sind. Die umlaufend größeren Anoden sollen im Elektrodenstapel der gefertigten Batteriezelle eine vollständige Überdeckung der Kathoden sicherstellen, da diese Überdeckung für die Stabilität der elektrochemischen Prozesse essentiell ist. Ebenso können Verbünde aus Anode und Separator oder Kathode und Separator sowie Verbünde aus Anode, Separator und Kathode verschieden große geometrische Abmessungen aufweisen, um eine vollständige Überdeckung im Elektrodenstapel der gefertigten Batteriezelle zu gewährleisten. Zur Zentrierung und Niederhaltung verschieden großer Elektroden oder Verbünde können daher mehrere Bündelungseinrichtungen, mehrere Ablageteile und/oder mehrere Verstärker vorgesehen sein, die jeweils an unterschiedliche Arten von Lagen angepasst sind. Beispielsweise können zwei Bündelungseinrichtungen, zwei Ablageteile und zwei Verstärker vorgesehen sein, wobei eine erste Bündelungseinrichtung, ein erstes Ablageteil und ein erster Verstärker an eine erste Lagenart, insbesondere an Anodenlagen, angepasst sind und wobei eine zweite Bündelungseinrichtung, ein zweites Ablageteil und ein zweiter Verstärker an eine zweite Lagenart, insbesondere an Kathodenlagen, angepasst sind.

Die erste Bündelungseinrichtung, das erste Ablageteil und der erste Verstärker bilden dabei eine erste Baugruppe und die zweite Bündelungseinrichtung, das zweite Ablageteil und der zweite Verstärker bilden eine zweite Baugruppe. Die Baugruppen sind bevorzugt konzentrisch angeordnet, damit die jeweiligen Bauteile ihre volle Wirkung gegenüber den jeweiligen Lagen entfalten können. Mit anderen Worten liegt das Ablageteil der einen Baugruppe radial außerhalb der Bündelungseinrichtung der anderen Baugruppe, wobei innerhalb der Baugruppen weiterhin die jeweilige Bündelungseinrichtung radial außerhalb des jeweiligen Ablageteils angeordnet ist. Entsprechendes gilt hinsichtlich der Verstärker und auch bei Ausführungsformen mit mehr als zwei Baugruppen und Ausführungsformen ohne Verstärker oder Bündelungseinrichtung.

Bei vorteilhaften Weiterbildungen weist die erfindungsgemäße Vorrichtung eine Handhabungseinrichtung zum Transportieren und Ablegen der Lagen auf. Die Handhabungseinrichtung kann ein Greifer, beispielsweise ein Vakuumgreifer, sein. Die Lagen können mittels der Handhabungseinrichtung in den Ablageraum transportiert und auf der Ablagefläche oder einer zuvor abgelegten Lage abgelegt werden. Vor, während und/oder nach dem Ablegen wird das elektromagnetische Wechselfeld erzeugt, indem die Wechselstromquelle aktiviert wird. Dadurch wird die abgelegte Lage zentriert. Auch hier wird durch die Erfindung ein Vorteil erzielt, da der Vakuumgreifer nur einmalig zum Einsatz kommen muss und die anschließende Zentrierung ohne die mechanische Beanspruchung durch den Vakuumgreifer erreicht wird.

Bei besonders vorteilhaften Weiterbildungen der erfindungsgemäßen Vorrichtung sind die mindestens eine Spule und das Ablageteil Bestandteile der Handhabungseinrichtung zum Transportieren und Ablegen der Lagen, wobei entweder das Ablageteil zumindest teilweise elektrisch leitfähig ist oder das Ablageteil nicht elektrisch leitfähig ist, wobei unterhalb des nicht elektrisch leitfähigen Ablageteils ein Magnet nach der obigen Beschreibung angeordnet ist. Während des Transports wird die abzulegende Lage in beiden Fällen durch das elektromagnetische Wechselfeld an das Ablageteil gedrückt (niedergehalten) und durch das elektromagnetische Wechselfeld zentriert. Aufgrund dessen kann die Handhabungseinrichtung frei durch den Raum bewegt werden, ohne dass sich die Lage von dem Ablageteil löst. Anschließend kann die Lage an einem Zielort abgelegt werden, wo sich bereits weitere Lagen befinden können. Die Zentrierung ermöglicht ein präzises Ablegen der transportierten Lage. Bei diesen Weiterbildungen können auch weitere Teile, insbesondere der Verstärker, die Stromquelle, die Bündelungseinrichtung und der Magnet Teile der Handhabungseinrichtung sein.

Das zumindest teilweise elektrisch leitfähige Ablageteil besteht bevorzugt zumindest teilweise aus einem der folgenden Bestandteile: Silber, Kupfer, Gold, Eisen, Graphen, leitfähiger Kunststoff, leitfähiges Verbundmaterial, Kupferoxidverbindungen. Bei Ablageteilen, die zumindest teilweise aus diesen Bestandteilen bestehen, stellt sich eine gute Niederhaltewirkung der Lagen ein.

Das nicht elektrisch leitfähige Ablageteil besteht bevorzugt zumindest teilweise aus einem der folgenden Bestandteile: nicht-leitfähiger Kunststoff, nicht-leitfähiges Verbundmaterial, Keramik, Glas, nicht-leitfähige Metalloxide.

Bei vorteilhaften Weiterbildungen ist das Ablageteil in vertikaler Richtung segmentiert. Das Ablageteil weist dann mehrere Schichten auf. Auf diese Weise ist eine sehr individuelle Anpassung des Magnetfelds, welches durch das Ablageteil erzeugt wird, möglich. Auch eine Kühlstruktur kann auf diese Weise in das Ablageteil integriert werden.

Das Ablageteil ist bevorzugt an die Form und Größe der Lagen angepasst und entspricht (in Draufsicht) bevorzugt im Wesentlichen der Form und Größe der Lagen. Die Zentrier- und die Niederhaltewirkung sind in diesem Fall optimal.

Die Erfindung wird beispielhaft anhand der Figuren dargestellt und erläutert. Dabei zeigen:
- Figur 1: eine Ausführungsform der erfindungsgemäßen Vorrichtung in einer perspektivischen Ansicht
- Figur 1A: die Vorrichtung der Figur 1 in einer perspektivischen Schnittdarstellung
- Figur 2: die Vorrichtung der Figur 1 in einer weiteren perspektivischen Ansicht
- Figur 3: die Vorrichtung der Figur 1 zusammen mit einem Gehäuse für eine Elektrodenzelle in einer perspektivischen Ansicht
- Figur 4: eine weitere Ausführungsform der erfindungsgemäßen Vorrichtung in einer perspektivischen Darstellung
- Figur 5: eine weitere Ausführungsform der erfindungsgemäßen Vorrichtung in einer schematischen Darstellung
- Figur 6: eine weitere Ausführungsform der erfindungsgemäßen Vorrichtung in einer schematischen Darstellung
- Figur 7A: eine weitere Ausführungsform der erfindungsgemäßen Vorrichtung in einer schematischen Draufsicht
- Figur 7B: die Vorrichtung der Figur 7A in einer Schnittdarstellung in Seitenansicht
- Figur 8A: eine weitere Ausführungsform der erfindungsgemäßen Vorrichtung in einer schematischen Draufsicht
- Figur 8B: die Vorrichtung der Figur 8A in einer Schnittdarstellung in Seitenansicht
- Figuren 9A bis 9I: Stromdichteverteilungen in einer Elektrode in unterschiedlichen elektromagnetischen Wechselfeldern
- Figur 10A: eine weitere Ausführungsform der erfindungsgemäßen Vorrichtung in einer schematischen Draufsicht und
- Figur 10B: die Vorrichtung der Figur 10A in einer Schnittdarstellung in Seitenansicht.

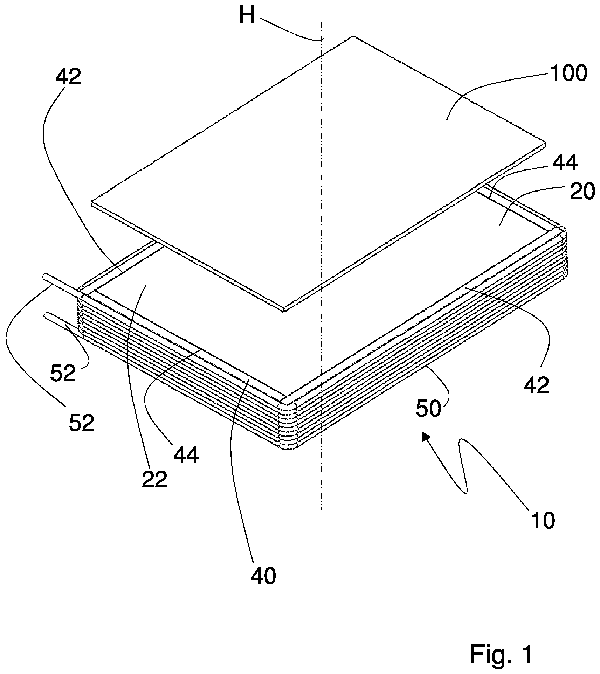

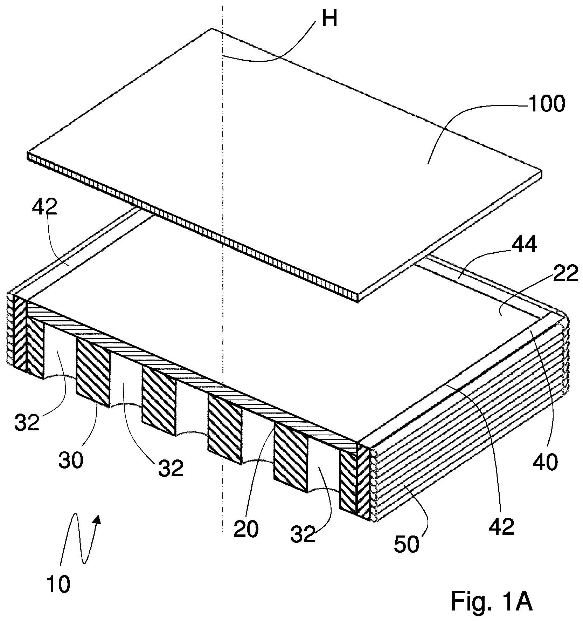

Die in der Figur 1 dargestellte Vorrichtung 10 zum Fertigen eines Elektrodenstapels aus einer Mehrzahl von folienförmigen, zumindest teilweise elektrisch leitfähigen Lagen 100 weist ein Ablageteil 20 aus einem leitfähigen Material, Kupfer, auf. Das Ablageteil 20 ist plattenförmig, weist also eine Dicke auf, die wesentlich kleiner ist als die Ausdehnungen des Ablageteils 20 in Breite und Länge. Das Ablageteil 20 ist horizontal angeordnet. Die Dicke des Ablageteils verläuft demnach in der Vertikalen, entlang einer Hochachse H.

Die obere Fläche des Ablageteils 20 bildet eine Ablagefläche 22 für die Lagen 100. Oberhalb der Ablagefläche 22 befindet sich ein Ablageraum. Der Ablageraum ist der Raum, in dem die Lagen im Zuge der Fertigung des Elektrodenstapels angeordnet werden, um den Elektrostapel zu bilden.

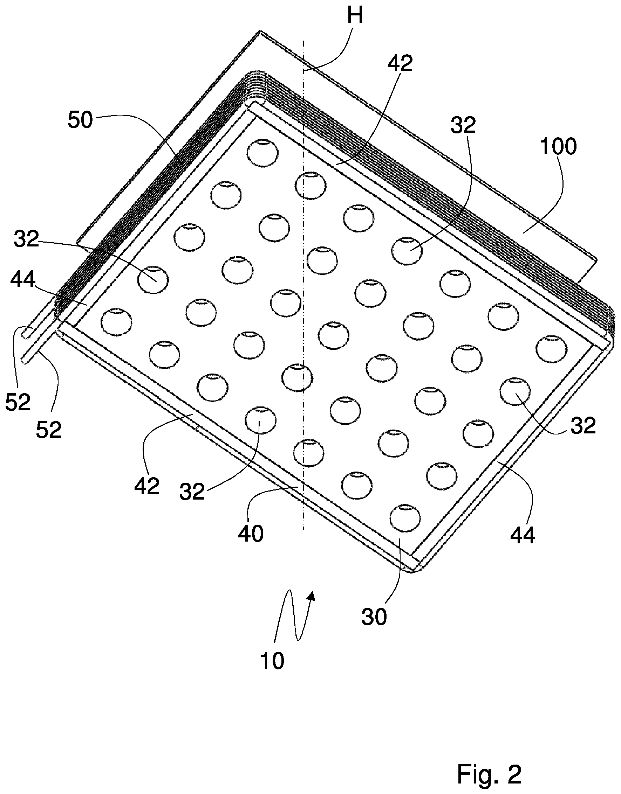

Unter dem Ablageteil 20 ist ein Verstärker 30 angeordnet, der die gleiche Breite und Länge wie das Ablageteil 20 aufweist (siehe Figuren 1a und 2). Der Verstärker 30 ist quaderförmig und besteht aus Mu-Metall.

Um das Ablageteil 20 und den Verstärker 30 verläuft eine Bündelungseinrichtung 40. Die Bündelungseinrichtung 40 besteht aus vier Segmenten, zwei langen Segmenten 42 und zwei kurzen Segmenten 44. Die vier Segmente 42, 44 bilden eine geschlossene Kontur um das Ablageteil 20 und den Verstärker 30. Der Verbund aus Ablageteil 20, Verstärker 30 und Bündelungseinrichtung 40 ist im Wesentlichen quaderförmig, also in Draufsicht rechteckig.

Die Vorrichtung 10 umfasst ferner eine Spule 50, die Teil eines nicht weiter dargestellten Wechselstromgenerators ist. Die Spule 50 ist an eine nicht dargestellte Wechselstromquelle angeschlossen. Zu diesem Zweck weist die Spule 50 zwei Anschlüsse 52 auf.

Die Spule 50 verläuft auf Höhe des Ablageraums, der Ablagefläche 22 und des Ablageteils 20 entlang einer geschlossenen Kontur um die senkrecht zur Ablagefläche 22 verlaufenden Hochachse H. Die Spule 50 weist zehn Windungen auf.

Wird die Wechselstromquelle aktiviert, so fließt Wechselstrom durch die Spule 50. Die Spule 50 erzeugt daraufhin ein elektromagnetisches Wechselfeld, dessen Wirkungsraum zumindest den Innenraum der Spule 50 umfasst. In diesem Innenraum befinden sich der Verstärker 30, das Ablageteil 20 und die Bündelungseinrichtung 40.

Wird die Lage 100 auf der Ablagefläche 22 des Ablageteils 20 abgelegt, so werden durch das elektromagnetische Wechselfeld der Spule 50 Wirbelströme in der Lage 100 induziert. Die in der Lage 100 induzierten Wirbelströme erzeugen ein eigenes Magnetfeld, welches zu jedem Zeitpunkt derart mit dem elektromagnetischen Wechselfeld der Spule 50 zusammenwirkt, dass die Lage 100 von der Spule 50 abgestoßen wird. Da die Spule 50 in radialer Richtung entlang einer geschlossenen Kontur um die Lage 100 verläuft, wird die Lage 100 auf der Ablagefläche 22 zentriert.

Da das Ablageteil 20 aus einem leitfähigen Material besteht, werden durch das elektromagnetische Wechselfeld in dem Ablageteil 20 ebenfalls Wirbelströme induziert. Die in dem Ablageteil 20 induzierten Wirbelströme erzeugen ebenfalls ein Magnetfeld, welches mit dem Magnetfeld der Lage 100 derart wechselwirkt, dass die Lage 100 nach unten auf das Ablageteil 20 gedrückt und dadurch niedergehalten wird.

Werden anschließend weitere Lagen 100 auf der bereits abgelegten Lage 100 abgelegt, so wirken die induzierten Magnetfelder derart zusammen, dass die Lagen 100 alle in Richtung des Ablageteils 20 gedrückt und dadurch als entstehender Elektrostapel niedergehalten werden.

Die Bündelungseinrichtung 40 dient dazu, das elektromagnetische Wechselfeld zu bündeln. Die Segmente 42, 44 bestehen aus Mu-Metall, ein Material mit hoher Permeabilität. Dadurch werden die Magnetfeldlinien des elektromagnetischen Wechselfelds der Spule 50 sowie der Magnetfelder der Lage 100 und des Ablageteils 20 derart beeinflusst, dass eine scharfe Abgrenzung zwischen den Magnetfeldern besteht, was zu einer starken Zentrierwirkung führt.

Durch das elektromagnetische Wechselfeld entsteht neben den Wirbelströmen auch Abwärme, die nach und nach die Bauteile der Vorrichtung 10 und die Lage 100 aufheizt. Der Verstärker 30 weist daher eine Vielzahl von vertikalen Kühlungsbohrungen 32 auf, welche gemeinsam eine Kühlstruktur ausbilden (siehe Figur 2). Durch die Kühlstruktur wird der Verstärker 30 im Betrieb von mehr Luft umströmt und dadurch gekühlt, wodurch die Abwärme besser abgeführt wird.

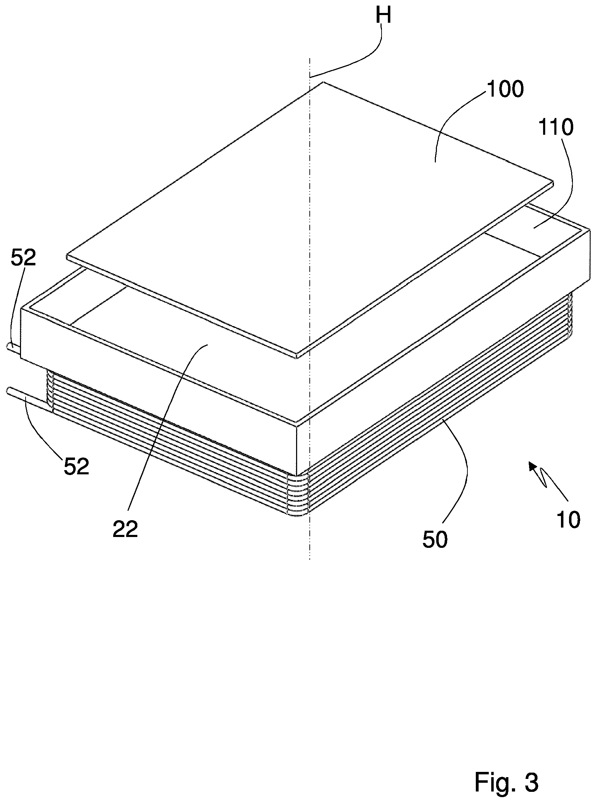

Wie in Figur 3 dargestellt, kann auf der erfindungsgemäßen Vorrichtung 10, also auf der Ablagefläche 22, ein Gehäuse 110 einer Elektrodenzelle angeordnet werden. Das Gehäuse 110 bildet dabei eine eigene Ablagefläche 22 aus. Auf dieser Ablagefläche 22 können Lagen 100 abgelegt werden. Wird die Stromquelle aktiviert, so erzeugt die Spule 50 erneut ein elektromagnetisches Wechselfeld. Das elektromagnetische Wechselfeld bewirkt wie oben beschrieben eine Zentrierung der Lagen 100 und zusätzlich ein Niederhalten der Lagen 100, also eine nach unten gerichtete Kraft auf die Lagen 100. Das Gehäuse 110 ist üblicherweise nicht ferromagnetisch, weist also eine geringe Permeabilität auf, und kann beispielsweise aus einer Aluminiumverbundfolie bestehen.

Auf diese Weise kann ein Elektrodenstapel unmittelbar in dem Gehäuse 110 gefertigt werden, in welchem er beispielsweise später in der Batterie angeordnet sein soll. Dadurch wird ein zusätzlicher Fertigungsschritt, nämlich das Überführen des fertig gestapelten Elektrodenstapels in ein entsprechendes Gehäuse 110, eingespart.

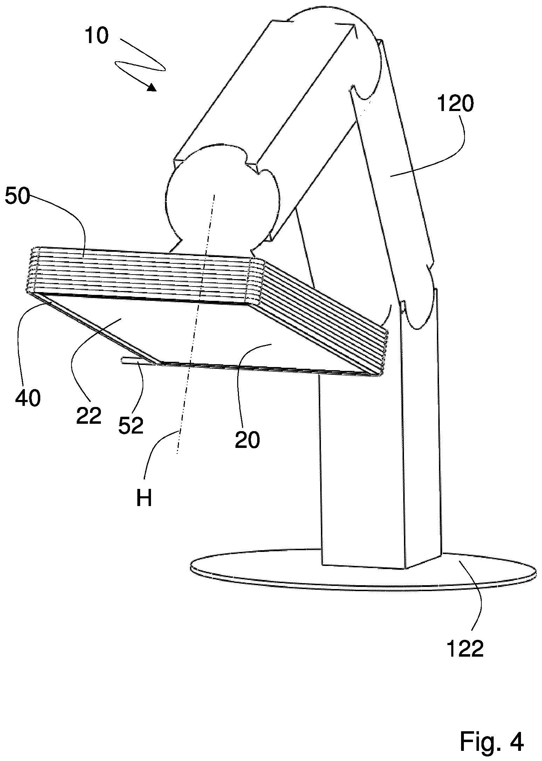

Die in Figur 4 dargestellte Ausführungsform der erfindungsgemäßen Vorrichtung 10 umfasst eine Handhabungseinrichtung in Form eines mehrachsigen Greifarms 120. Der Greifarm 120 ist auf einer Grundplatte 122 montiert und weist an seinem vorderen Ende den Verbund aus Verstärker 30 (hier nicht sichtbar), Bündelungseinrichtung 40, elektrisch leitfähigem Ablageteil 20 und Spule 50 auf. Das Ablageteil 20 umfasst auch hier eine Ablagefläche 22, die bei der gezeigten Stellung des Gelenkarms 120 nach unten gerichtet ist.

Wird eine Lage 100 (hier nicht dargestellt) auf der Ablagefläche 22 abgelegt, worunter auch ein anderweitiges Heranführen der Lage an die Ablagefläche 22 zu verstehen ist, beispielsweise eine Bewegung entgegen der Gravitationsrichtung, und wird daraufhin die Stromquelle aktiviert, so wird von der Spule 50 wie beschrieben ein elektromagnetisches Wechselfeld erzeugt. Das elektromagnetische Wechselfeld induziert auch hier Wirbelströme in dem Ablageteil 20 und in der Lage 100, woraufhin sich Ablageteil 20 und Lage 100 aufgrund der von den jeweiligen Wirbelströmen erzeugten Magnetfelder anziehen, die Lage 100 also gegen das Ablageteil 20 gedrückt wird. Die Lage 100 wird dadurch an dem Ablageteil 20 niedergehalten und kann durch die erfindungsgemäße Vorrichtung 10 an einen anderen Ort verbracht werden.

Die in der Lage 100 induzierten Wirbelströme erzeugen wie erwähnt ein Magnetfeld, welches dem elektromagnetischen Wechselfeld entgegen gerichtet ist. Dadurch wird auch bei dieser Ausführungsform die Lage 100 auf der Ablagefläche 22 zentriert. Mit dieser Handhabungseinrichtung ist es daher möglich, eine Lage 100 ohne mechanische Krafteinwirkung zu halten und am Ende des Transports präzise abzulegen.

Bei anderen Ausführungsformen mit einer Handhabungseinrichtung kann das Ablageteil 20 auch nicht elektrisch leitfähig sein. In diesem Fall wird die Lage 100 nicht durch das elektromagnetische Wechselfeld an die Ablagefläche gedrückt (niedergehalten). Bei solchen Ausführungsformen kann beispielsweise eine andere Form des Niederhaltens, beispielsweise mittels Vakuum, verwendet werden. Das elektromagnetische Wechselfeld dient dann nur der Zentrierung der Lage 100 auf der Ablagefläche 22.

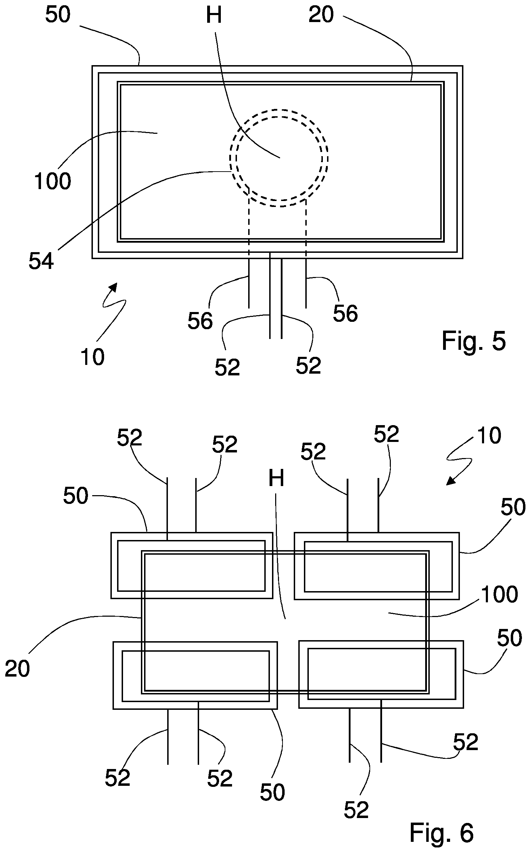

Bei der Ausführungsform der erfindungsgemäßen Vorrichtung 10 gemäß Figur 5 ist erneut ein Ablageteil 20 vorgesehen, welches in radialer Richtung vollständig von einer Spule 50 umgeben ist. Die Spule 50 weist zwei Anschlüsse 52 auf, mit welchen die Spule 50 an eine Wechselstromquelle angeschlossen ist. Zusätzlich zu der Spule 50 ist eine weitere Spule, eine Sekundärspule 54 vorgesehen, die kreisförmig verläuft und unterhalb des Ablageteils 20 angeordnet ist. Die Sekundärspule 54 weist zwei Anschlüsse 56 auf, mittels denen die Spule 54 mit invertierter Phase ebenfalls an die Wechselstromquelle angeschlossen ist. Durch die Sekundärspule 54 wird auf diese Weise eine zusätzliche Niederhaltungswirkung erzeugt, da sie ein Magnetfeld erzeugt, das die Magnetfelder der Lagen 100 und des Ablageteils 20 und damit diese Komponenten anzieht.

Bei der Ausführungsform gemäß Figur 6 sind vier Spulen 50 vorgesehen, welche entlang einer geschlossenen, rechteckigen Kontur um die senkrecht zur Ablagefläche 22 des Ablageteils 20 verlaufende Hochachse H gleichmäßig verteilt sind. Die Spulen 50 sind bei dieser Ausführungsform alle in gleicher Weise an die Wechselstromquelle angeschlossen. Dadurch wird von den Spulen 50 ein gemeinsames elektromagnetisches Wechselfeld erzeugt. Dieses elektromagnetische Wechselfeld weist einen Wirkungsraum auf, der den umlaufenden Rand der Lage 100 teilweise einschließt und an vier Stellen, nämlich einmal pro Spule 50, über den Rand der Lage hinausragt. Aufgrund dieser Anordnung der Spulen 50 kommt es auch hier zu einer Zentrierung der auf die Ablagefläche 22 des Ablageteils 20 abgelegten Lage 100.

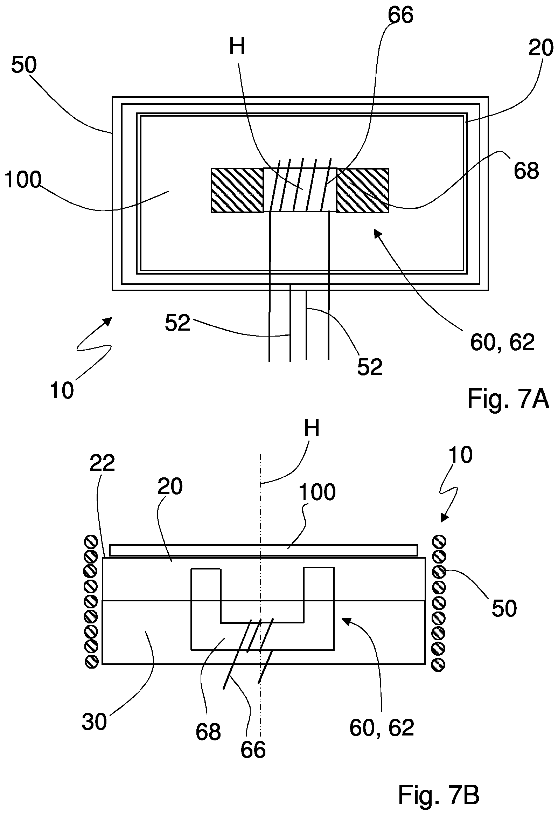

Die Ausführungsform der erfindungsgemäßen Vorrichtung 10 gemäß den Figuren 7A und 7B umfasst erneut ein Ablageteil 20, welches von einer Spule 50 in radialer Richtung umgeben ist. Das Ablageteil 20 ist bei dieser Ausführungsform nicht elektrisch leitfähig. Dort werden also keine Wirbelströme induziert. Zu einer Zentrierwirkung der Lage 100 kommt es dennoch, da das elektromagnetische Wechselfeld der Spule 50 mit dem in der Lage 100 entstehenden Feld wechselwirkt und die Lage 100 zentriert.

Unterhalb des Ablageteils 20 ist ein Magnet 60 in Form eines Elektromagneten 62 vorgesehen. Der Elektromagnet 62 weist einen Eisenkern 68 und eine Magnetspule 66 auf. Durch den Elektromagneten 62 wird ein Magnetfeld erzeugt, welches mit dem von der Spule 50 in den Lagen 100 induzierten Magnetfeld derart zusammenwirkt, dass die Lagen 100 auf das Ablageteil 20 gedrückt werden.

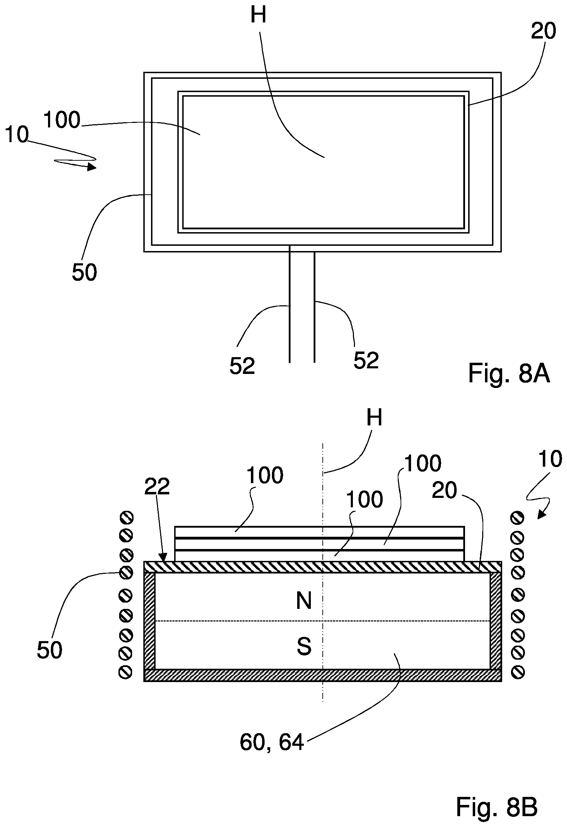

Bei der Ausführungsform gemäß den Figuren 8A und 8B umfasst die Vorrichtung 10 erneut ein Ablageteil 20, welches von einer Spule 50 in radialer Richtung umgeben ist. Auch hier ist das Ablageteil 20 nicht elektrisch leitfähig, wodurch auch hier in dem Ablageteil 20 keine Wirbelströme induziert werden. Die Zentrierwirkung wird dadurch nicht beeinflusst und liegt auch hier unverändert vor.

Figur 8B zeigt drei zu einem Elektrodenstapel aufeinander gelegte Lagen 100. Die Lagen 100 sind hinsichtlich ihrer Dicken nicht maßstabsgetreu, nämlich übermäßig dick dargestellt.

Unter dem Ablageteil 20 ist ein Magnet 60 in Form eines Permanentmagneten 64 vorgesehen. Der Permanentmagnet 64 wirkt mit der auf der Ablagefläche 22 abgelegten Lage 100 derart zusammen, dass die Lage 100 auf die Ablagefläche 22 gedrückt wird.

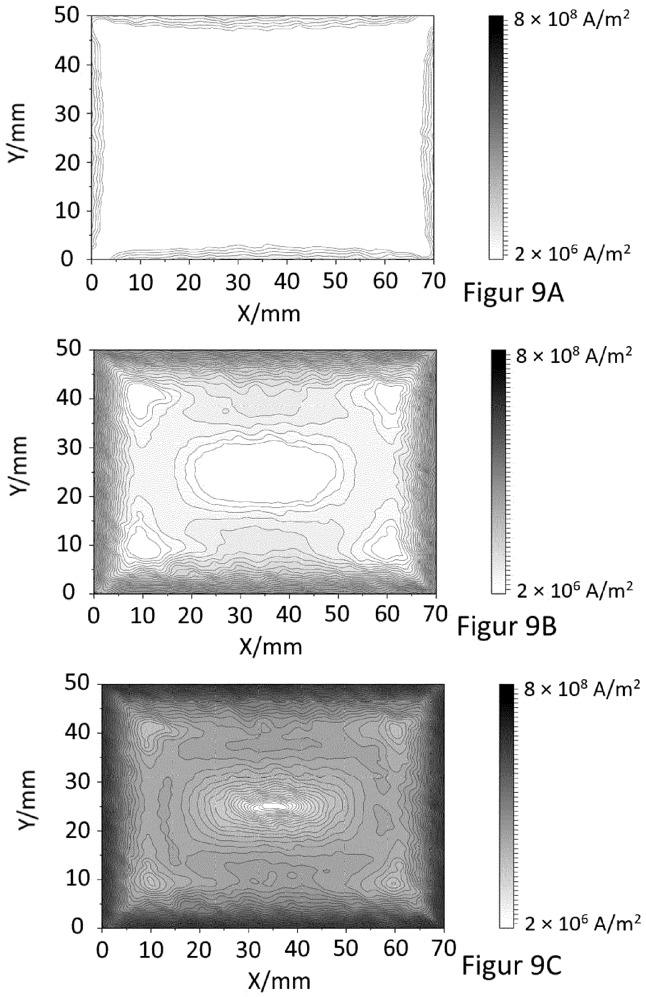

Die Figuren 9A bis 9I zeigen die simulierte Stromdichteverteilung (Stromdichte J) einer Lage 100 in verschiedenen elektromagnetischen Wechselfeldern. Die Skala der Stromdichte J reicht von 2 x 10⁶ bis 8 × 10⁸ A/m². Die Lage 100 ist 50 mm breit und 70 mm lang und besteht aus Kupfer. Die dargestellten Isolinien verdeutlichen den Verlauf der Stromdichte. Simuliert wurde die Anordnung der Lage 100 auf der Ablagefläche 22 der Vorrichtung 10 gemäß Figur 1. Die Stromstärke der Spule 50 (hier nicht dargestellt) wurde mit 15 A simuliert.

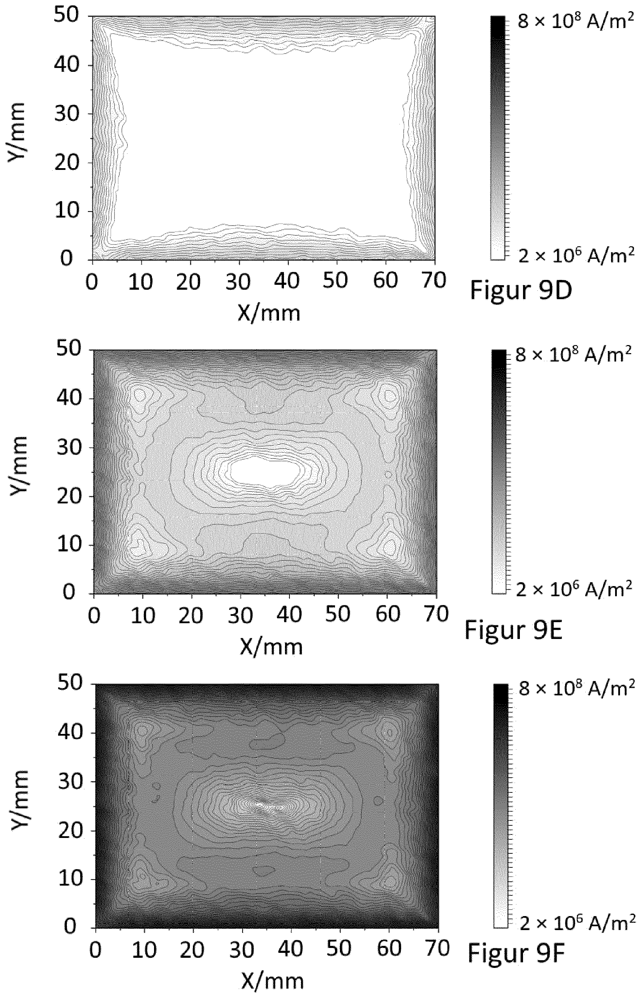

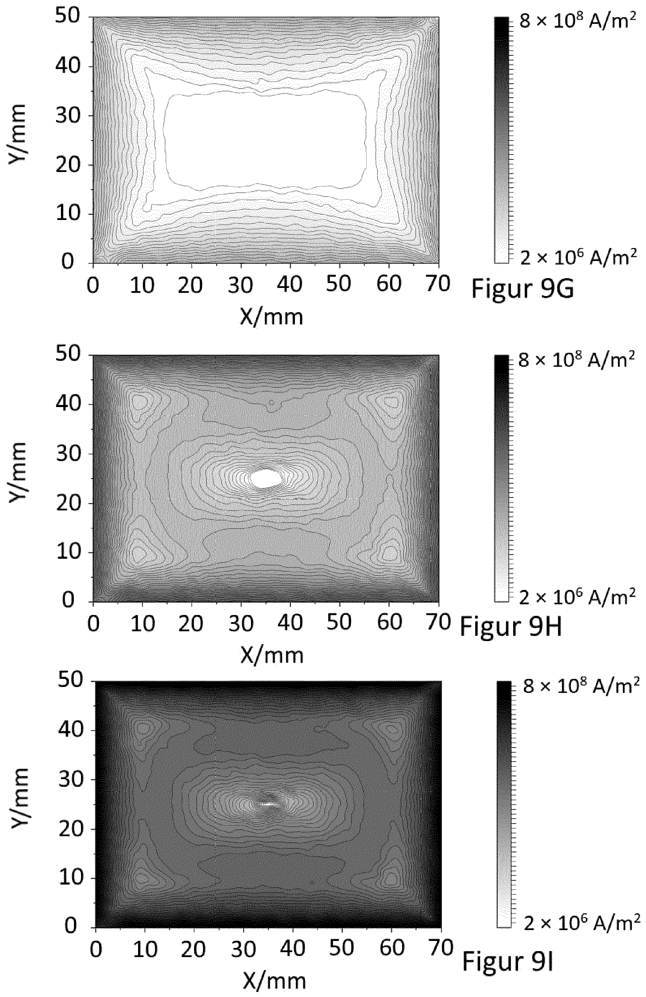

In den Figuren 9A bis 9C wurde eine Spule mit fünf Windungen simuliert, in den Figuren 9D bis 9F eine Spule mit zehn Windungen und in den Figuren 9G bis 9I eine Spule mit 20 Windungen. In den Figuren 9A, 9D und 9G wurde das elektromagnetische Wechselfeld mit einer Frequenz von 500 Hz simuliert, in den Figuren 9B, 9E und 9H mit 5.000 Hz und in den Figuren 9C, 9F und 9I mit 50.000 Hz.

Wie aus den Figuren 9A bis 9I hervorgeht, stellt sich mit zunehmender Windungszahl und zunehmender Frequenz eine höhere Stromdichte J ein. Zu erkennen ist auch, dass durch die erfindungsgemäße Vorrichtung 10 die Stromdichte im Rand der Lage 100 wesentlich höher ist als in anderen Bereichen, was insbesondere an der Bündelungseinrichtung liegt und zu einer sehr guten Zentrierwirkung führt.

Das elektromagnetische Wechselfeld der Spule 50 und das von den Wirbelströmen insbesondere im Rand der Lage 100 induzierte Magnetfeld stoßen einander ab, wirken also derart zusammen, dass die Lage 100 auf der Ablagefläche 22 zentriert wird.

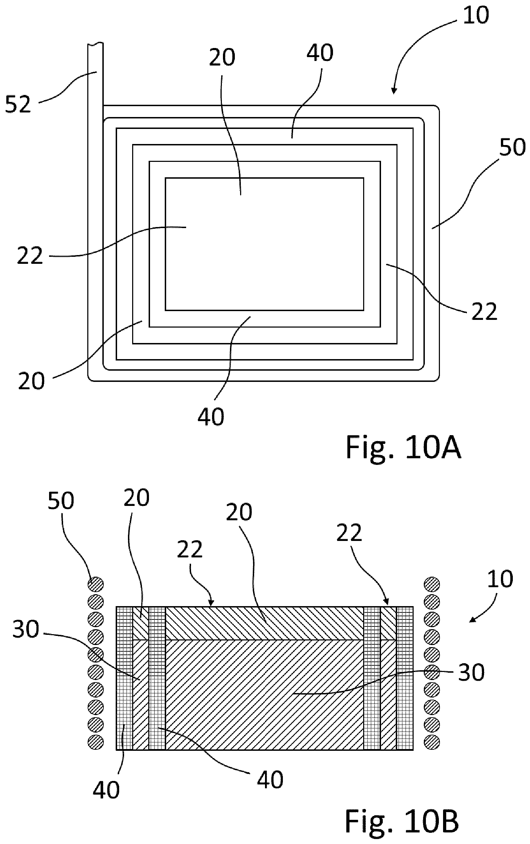

Die Figuren 10A und 10B zeigen eine weitere Ausführungsform der erfindungsgemäßen Vorrichtung 10. Bei dieser Ausführungsform umfasst die Vorrichtung 10 zwei Ablageteile 20 mit jeweils einer Ablagefläche 22, zwei Verstärker 30 und zwei Bündelungseinrichtungen 40. Das eine Ablageteil 20 und der eine, darunterliegende Verstärker 30 sind mittig angeordnet. Um dieses Ablageteil 20 und den Verstärker 30 ist die erste, ringförmige Bündelungseinrichtung 40 angeordnet. Diese Bauteile bilden eine erste Baugruppe.

Radial außerhalb von der ersten Baugruppe sind ein zweites, ringförmiges Ablageteil 20 mit darunterliegendem, ebenfalls ringförmigen Verstärker 30 angeordnet. Radial außerhalb dieser Bauteile ist eine zweite, ringförmige Bündelungseinrichtung 40 angeordnet. Diese drei Bauteile bilden eine zweite Baugruppe. Die zweite Baugruppe ist insgesamt radial außerhalb der ersten Baugruppe angeordnet.

Radial außerhalb der zweiten Baugruppe ist eine Spule 50 mit Anschlüssen 52 angeordnet. Die Spule 50 ist Teil eines nicht weiter dargestellten Wechselstromgenerators, der zudem eine Stromquelle (nicht dargestellt) umfasst.

Aufgrund ihrer unterschiedlichen Größen sind die Bauteile der beiden Baugruppen an unterschiedliche Arten von Lagen angepasst. Die erste Baugruppe ist für kleinere und die zweite Baugruppe für größere Lagen vorgesehen. Wenn sich beim Stapeln der Lagen diese Lagen abwechseln, werden durch die Ausführungsform der Figuren 10A, 10B beide Lagenarten sicher zentriert.

### Bezugszeichenliste

- 10: Vorrichtung
- 20: Ablageteil
- 22: Ablagefläche
- 30: Verstärker
- 32: Kühlungsbohrungen
- 40: Bündelungseinrichtung
- 42: lange Segmente
- 44: kurze Segmente
- 50: Spule
- 52: Anschlüsse
- 54: Sekundärspule
- 56: Anschlüsse
- 60: Magnet
- 62: Elektromagnet
- 64: Permanentmagnet
- 66: Magnetspule
- 68: Eisenkern
- 100: Lagen
- 110: Gehäuse
- 120: Greifarm
- 122: Grundplatte

- H: Hochachse

## Patentansprüche

1. Verfahren zum Fertigen eines Elektrodenstapels, insbesondere für eine Batterie, für eine Brennstoffzelle oder für einen Kondensator, bei dem eine Mehrzahl von folienförmigen, zumindest teilweise elektrisch leitfähigen Lagen (100) zu einem Elektrodenstapel aufgeschichtet wird, wobei zunächst eine erste Lage (100) auf einer Ablagefläche (22) und jede weitere Lage auf der zuvor abgelegten Lage (100) platziert wird,
**dadurch gekennzeichnet, dass** für eine Zeitspanne t vor, während und/oder nach dem Ablegen mindestens einer Lage (100) ein die Lage (100) zentrierendes, elektromagnetisches Wechselfeld erzeugt wird.

2. Verfahren nach Anspruch 1,
**dadurch gekennzeichnet, dass** ein Wirkungsraum des elektromagnetischen Wechselfelds die abgelegte Lage (100) oder deren umlaufenden Rand teilweise einschließt und an mindestens drei Stellen über den Rand der Lage (100) nach außen hinausragt oder dass der Wirkungsraum des elektromagnetischen Wechselfelds die abgelegte Lage (100) oder deren umlaufenden Rand vollständig einschließt.

3. Verfahren nach einem der vorhergehenden Ansprüche,
**dadurch gekennzeichnet, dass** der Wirkungsraum des elektromagnetischen Wechselfelds ein unterhalb des Ablageraums angeordnetes, zumindest teilweise elektrisch leitfähiges Ablageteil (20) zumindest teilweise, insbesondere vollständig umfasst.

4. Verfahren nach einem der vorhergehenden Ansprüche,
**dadurch gekennzeichnet, dass** das elektromagnetische Wechselfeld im Pulsbetrieb betrieben wird, wobei eine Aktivzeitspanne t_{Aktiv} zwischen 0,001 und 10 Sekunden beträgt und eine Pausenzeitspanne t_{Pause} zwischen 0,001 und 10 Sekunden beträgt, wobei insbesondere die Aktivzeitspanne t_{Aktiv} um einen Faktor 2-10 kleiner als die Pausenzeitspanne t_{Pause} ist.

5. Verfahren nach einem der vorhergehenden Ansprüche,
**dadurch gekennzeichnet, dass** die Ablagefläche (22) von dem Ablageteil (20) oder von einem Gehäuse (110) einer Elektrodenzelle definiert wird.

6. Verfahren nach einem der vorhergehenden Ansprüche,
**dadurch gekennzeichnet, dass** das elektromagnetisches Wechselfeld mit einer Frequenz zwischen 100 Hz und 1 kHz und einer Stromstärke zwischen 100 A und 1 kA oder alternativ mit einer Frequenz zwischen 1 kHz und 100 kHz und einer Stromstärke zwischen 2 A und 100 A betrieben wird.

7. Vorrichtung zum Fertigen eines Elektrodenstapels aus einer Mehrzahl von folienförmigen, zumindest teilweise elektrisch leitfähigen Lagen (100) mit einem eine Ablagefläche (22) bereitstellenden Ablageteil (20) und mit einem Wechselstromgenerator, der mindestens eine Spule (50, 54) und eine Stromquelle umfasst, wobei die mindestens eine Spule (50, 54) derart relativ zu der Ablagefläche angeordnet ist, dass sie bei aktivierter Stromquelle zumindest in einem Ablageraum oberhalb der Ablagefläche (22) ein die Lagen (100) relativ zu der Ablagefläche (22) zentrierendes, elektromagnetisches Wechselfeld erzeugt.

8. Vorrichtung nach Anspruch 7,
**dadurch gekennzeichnet, dass** das Ablageteil (20) zumindest teilweise elektrisch leitfähig ist oder dass das Ablageteil (20) nicht elektrisch leitfähig ist, wobei unterhalb des nicht elektrisch leitfähigen Ablageteils (20) ein Magnet (60), insbesondere ein Elektromagnet (62) und/oder ein Permanentmagnet (64), angeordnet ist, der eingerichtet ist, auf dem Ablageteil (20) abgelegte Lagen (100) niederzuhalten.

9. Vorrichtung nach Anspruch 7 oder 8,
**dadurch gekennzeichnet, dass** die Ablagefläche (22) in Form und Größe den abzulegenden Lagen (100) entspricht oder geringfügig größer ist.

10. Vorrichtung nach einem der Ansprüche 7 bis 9,
**dadurch gekennzeichnet, dass** die Spule (50, 54) auf Höhe des Ablageraums, der Ablagefläche (22) und/oder des Ablageteils (20) entlang einer geschlossenen Kontur um eine senkrecht zur Ablagefläche (22) verlaufende Hochachse H verläuft oder dass mehrere Spulen (50, 54) vorgesehen sind, wobei die Spulen (50, 54) entlang einer geschlossenen Kontur um eine senkrecht zur Ablagefläche (22) verlaufende Hochachse H gleichmäßig verteilt sind, wobei die Kontur vorzugsweise an die Form und Größe der Lagen (100) angepasst und insbesondere rechteckig oder im Wesentlichen rechteckig ist.

11. Vorrichtung nach einem der Ansprüche 7 bis 10,
**dadurch gekennzeichnet, dass** radial außerhalb des Ablageteils (20) eine Bündelungseinrichtung (40) zum Bündeln des elektromagnetischen Wechselfelds vorgesehen ist, wobei die Bündelungseinrichtung (40) zumindest teilweise aus einem Material mit hoher Permeabilität besteht, beispielsweise aus Mu-Metall (NiFe), wobei die Bündelungseinrichtung (40) segmentiert ist und/oder wobei die Bündelungseinrichtung (40) an die Form und Größe der Lagen (100) angepasst und insbesondere im Wesentlichen rechteckig ist.

12. Vorrichtung nach einem der Ansprüche 7 bis 11,
**dadurch gekennzeichnet, dass** unterhalb des Ablageteils (20) ein Verstärker (30) aus einem Material mit hoher Permeabilität, beispielsweise Mu-Metall (NiFe), vorgesehen ist, wobei vorzugsweise der Verstärker (30) in radialer Richtung von der Bündelungseinrichtung (40) umschlossen ist und/oder der Verstärker (30) eine Kühlstruktur, insbesondere Kühlbohrungen (32) und/oder Kühlnuten, aufweist und/oder die Vorrichtung (10) eine Kühlungseinrichtung für den Verstärker (30) aufweist und/oder der Verstärker (30) segmentiert ist und/oder der Verstärker (30) an die Form und Größe der Lagen (100) angepasst und insbesondere rechteckig oder im Wesentlichen rechteckig ist.

13. Vorrichtung nach einem der Ansprüche 7 bis 12,
**dadurch gekennzeichnet, dass** mehrere Bündelungseinrichtungen (40), mehrere Ablageteile (20) und/oder mehrere Verstärker (30) vorgesehen sein, die jeweils an unterschiedliche Arten von Lagen (100) angepasst sind.

14. Vorrichtung nach einem der Ansprüche 7 bis 13,
**dadurch gekennzeichnet, dass** zwei Bündelungseinrichtungen (40), zwei Ablageteile (20) und zwei Verstärker (30) vorgesehen sein, wobei eine erste Bündelungseinrichtung (40), ein erstes Ablageteil (20) und ein erster Verstärker (30) an eine erste Lagenart, insbesondere an Anodenlagen, angepasst sind und wobei eine zweite Bündelungseinrichtung (30), ein zweites Ablageteil (20) und ein zweiter Verstärker (30) an eine zweite Lagenart, insbesondere an Kathodenlagen, angepasst sind.

15. Vorrichtung nach einem der Ansprüche 7 bis 14,
**dadurch gekennzeichnet, dass** die mindestens eine Spule (50, 54) und das Ablageteil (20) Bestandteile einer Handhabungseinrichtung zum Transportieren und Ablegen der Lagen (100) sind und/oder dass das Ablageteil (20) zumindest teilweise aus einem der folgenden Bestandteile besteht: nicht-leitfähiger Kunststoff, nicht-leitfähiges Verbundmaterial, Keramik, Glas, nicht-leitfähige Metalloxide, leitfähiger Kunststoff, leitfähiges Verbundmaterial, Silber, Kupfer, Gold, Eisen, Graphen, Kupferoxidverbindungen und/oder dass das Ablageteil (20) in vertikaler Richtung segmentiert ist und/oder dass das Ablageteil (20) an die Form und Größe der Lagen (100) angepasst ist und insbesondere im Wesentlichen der Form und Größe der Lagen (100) entspricht.

## Claims

1. Method for producing an electrode stack, in particular for a battery, for a fuel cell or for a capacitor, in which a plurality of foil-shaped, at least partially electrically conductive layers (100) are stacked to form an electrode stack, wherein a first layer (100) is initially placed on a deposition surface (22) and each further layer is placed on the previously deposited layer (100), **characterised in that** an alternating electromagnetic field centring the layer (100) is generated for a period of time t before, during and/or after the deposition of at least one layer (100).

2. Method according to claim 1, **characterised in that** an effective space of the alternating electromagnetic field partially encloses the deposited layer (100) or its circumferential edge and projects outwards beyond the edge of the layer (100) in at least three places, or **in that** the effective space of the alternating electromagnetic field completely encloses the deposited layer (100) or its circumferential edge.

3. Method according to one of the preceding claims, **characterised in that** the effective space of the alternating electromagnetic field at least partially, in particular completely, encloses an at least partially electrically conductive deposition part (20) arranged below the depositing space.

4. Method according to one of the preceding claims, **characterised in that** the alternating electromagnetic field is operated in pulsed mode, wherein an active time span t_{Aktiv} is between 0.001 and 10 seconds and a pause time span t_{Pause} is between 0.001 and 10 seconds, wherein in particular the active time span t_{Aktiv} is smaller than the pause time span t_{Pause} by a factor of 2-10.

5. Method according to one of the preceding claims, **characterised in that** the deposition surface (22) is defined by the deposition part (20) or by a housing (110) of an electrode cell.

6. Method according to claim 1, **characterised in that** the alternating electromagnetic field is operated at a frequency between 100 Hz and 1 kHz and a current intensity between 100 A and 1 kA or alternatively at a frequency between 1 kHz and 100 kHz and a current intensity between 2 A and 100 A.

7. Apparatus for producing an electrode stack from a plurality of foil-shaped, at least partially electrically conductive layers (100) with a deposition part (20) providing a deposition surface (22) and with an alternating current generator comprising at least one coil (50, 54) and a current source, wherein the at least one coil (50, 54) is arranged relative to the deposition surface in such a way that, when the current source is activated, it generates an alternating electromagnetic field centring the layers (100) relative to the deposition surface (22) at least in a deposition space above the deposition surface (22).

8. Apparatus according to claim 7, **characterised in that** the deposition part (20) is at least partially electrically conductive or **in that** the deposition part (20) is not electrically conductive, wherein a magnet (60), in particular an electromagnet (62) and/or a permanent magnet (64), is arranged below the non-electrically conductive deposition part (20) and is configured to hold down layers (100) deposited on the deposition part (20).

9. Apparatus according to claim 7 or 8, **characterised in that** the deposition surface (22) corresponds in shape and size to the layers (100) to be deposited or is slightly larger.

10. Apparatus according to one of claims 7 to 9, **characterised in that** the coil (50, 54) extends at the level of the deposition space, the deposition surface (22) and/or the deposition part (20) along a closed contour about a vertical axis H extending perpendicularly to the deposition surface (22), or **in that** a plurality of coils (50, 54) are provided, wherein the coils (50, 54) are evenly distributed along a closed contour about a vertical axis H extending perpendicularly to the deposition surface (22), wherein the contour is preferably adapted to the shape and size of the layers (100) and is in particular rectangular or substantially rectangular.

11. Apparatus according to one of claims 7 to 10, **characterised in that** a bundling device (40) for bundling the alternating electromagnetic field is provided radially outside the deposition part (20), wherein the bundling device (40) consists at least partly of a material with high permeability, for example of Mu-metal (NiFe), wherein the bundling device (40) is segmented and/or wherein the bundling device (40) is adapted to the shape and size of the layers (100) and is in particular essentially rectangular.

12. Apparatus according to one of claims 7 to 11, **characterised in that** an amplifier (30) made of a material with high permeability, for example Mu-metal (NiFe), is provided below the deposition part (20), wherein preferably the amplifier (30) is enclosed in the radial direction by the bundling device (40) and/or the amplifier (30) has a cooling structure, in particular cooling holes (32) and/or cooling grooves, and/or the apparatus (10) has a cooling device for the amplifier (30) and/or the amplifier (30) is segmented and/or the amplifier (30) is adapted to the shape and size of the layers (100) and is in particular rectangular or substantially rectangular.

13. Apparatus according to one of claims 7 to 12, **characterised in that** several bundling devices (40), several deposition parts (20) and/or several amplifiers (30) are provided, which are each adapted to different types of layers (100).

14. Apparatus according to one of claims 7 to 13, **characterised in that** two bundling devices (40), two deposition parts (20) and two amplifiers (30) are provided, wherein a first bundling device (40), a first deposition part (20) and a first amplifier (30) are adapted to a first type of layer, in particular to anode layers, and wherein a second bundling device (30), a second deposition part (20) and a second amplifier (30) are adapted to a second type of layer, in particular to cathode layers.

15. Apparatus according to one of claims 7 to 14, **characterised in that** the at least one coil (50, 54) and the deposition part (20) are components of a handling device for transporting and depositing the layers (100) and/or **in that** the deposition part (20) consists at least partially of one of the following components: non-conductive plastic, non-conductive composite material, ceramic, glass, non-conductive metal oxides, conductive plastic, conductive composite material, silver, copper, gold, iron, graphene, copper oxide compounds and/or **in that** the deposition part (20) is segmented in the vertical direction and/or **in that** the deposition part (20) is adapted to the shape and size of the layers (100) and in particular essentially corresponds to the shape and size of the layers (100).

## Revendications

1. Procédé de fabrication d'un empilement d'électrodes, notamment pour une batterie, pour une pile à combustible ou pour un condensateur, dans le cadre duquel une pluralité de couches (100) sous la forme de films et au moins partiellement électriquement conductrices sont empilées pour former un empilement d'électrodes, une première couche (100) étant d'abord posée sur un plan de dépôt (22) et chaque couche suivante étant posée sur la couche (100) précédemment posée,
**caractérisé en ce que**, pendant un temps t avant, pendant et/ou après le dépôt d'au moins une couche (100), un champ alternatif électromagnétique est engendré qui centre la couche (100).

2. Procédé selon la revendication 1,
**caractérisé en ce qu'**un espace d'action du champ alternatif électromagnétique entoure partiellement la couche (100) déposée ou le bord périphérique de celle-ci et dépasse à au moins trois endroits le bord de la couche (100) vers l'extérieur ou **en ce que** l'espace d'action du champ alternatif électromagnétique entoure entièrement la couche (100) déposée ou le bord périphérique de celle-ci.

3. Procédé selon l'une des revendications précédentes,
**caractérisé en ce que** l'espace d'action du champ alternatif électromagnétique entoure, au moins partiellement, notamment entièrement, une partie de dépôt (20) disposée en-dessous de l'espace de dépôt et étant au moins partiellement électriquement conductrice.

4. Procédé selon l'une des revendications précédentes,
**caractérisé en ce que** le champ alternatif électromagnétique fonctionne par impulsions, une période active t_{active} durant entre 0,001 et 10 secondes et une période de pause tₚₐᵤₛₑ durant entre 0,001 et 10 secondes, la période active t_{active} étant inférieure d'un facteur 2 à 10 à la période de pause tₚₐᵤₛₑ.

5. Procédé selon l'une des revendications précédentes,
**caractérisé en ce que** le plan de dépôt (22) est défini par la partie de dépôt (20) ou par un boîtier (110) d'une cellule d'électrodes.

6. Procédé selon l'une des revendications précédentes,
**caractérisé en ce que** le champ alternatif électromagnétique fonctionne avec une fréquence entre 100 Hz et 1 kHz et une intensité de courant entre 100 A et 1 kA ou, de façon alternative, avec une fréquence entre 1 kHz et 100 kHz et une intensité de courant entre 2 A et 100 A.

7. Dispositif pour la fabrication d'un empilement d'électrodes à partir d'une pluralité de couches (100) sous la forme de films et au moins partiellement électriquement conductrices, avec une partie de dépôt (20) mettant à disposition un plan de dépôt (22) et avec un générateur de courant alternatif qui comprend au moins une bobine (50, 54) et une source de courant, ladite au moins une bobine (50, 54) étant disposée par rapport au plan de dépôt (22) de façon telle qu'elle génère au moins dans un espace de dépôt au-dessus du plan de dépôt (22) un champ électromagnétique alternatif faisant centrer les couches (100) par rapport au plan de dépôt (22), lorsque la source de courant est activée.

8. Dispositif selon la revendication 7,
**caractérisé en ce que** la partie de dépôt (20) est au moins partiellement électriquement conductrice ou **en ce que** la partie de dépôt (20) n'est pas électriquement conductrice, un aimant (60), notamment un électro-aimant (62) et/ou un aimant permanent (64), étant disposé en-dessous de la partie de dépôt (20) non électriquement conductrice, qui est agencé pour tenir bas des couches (100) déposées sur la partie de dépôt (20).

9. Dispositif selon la revendication 7 ou 8,
**caractérisé en ce que** le plan de dépôt (22) correspond en forme et en taille aux couches (100) à déposer ou est légèrement plus grand.

10. Dispositif selon l'une des revendications 7 à 9,
**caractérisé en ce que** la bobine (50, 54) est agencée au niveau de l'espace de dépôt, du plan de dépôt (22) et/ou de la partie de dépôt (20) le long d'un contour fermé autour d'un axe vertical H s'étendant perpendiculairement au plan de dépôt (22) ou **en ce que** plusieurs bobines (50, 54) sont prévues, les bobines (50, 54) étant réparties régulièrement le long d'un contour fermé autour d'un axe vertical H s'étendant perpendiculairement au plan de dépôt (22), de préférence, le contour étant adapté à la forme et à la taille des couches (100) et étant notamment rectangulaire ou sensiblement rectangulaire.

11. Dispositif selon l'une des revendications 7 à 10,
**caractérisé en ce que**, radialement à l'extérieur de la partie de dépôt (20), un dispositif de concentration (40) pour concentrer le champ alternatif électromagnétique est prévu, le dispositif de concentration (40) étant constitué au moins partiellement d'un matériau ayant une forte perméabilité, par exemple d'un mu-métal (NiFe), le dispositif de concentration (40) étant segmenté et/ou le dispositif de concentration (40) étant adapté à la forme et la taille des couches (100) et étant notamment sensiblement rectangulaire.

12. Dispositif selon l'une des revendications 7 à 11,
**caractérisé en ce qu'**un amplificateur (30) en un matériau à forte perméabilité, par exemple en mu-métal (NiFe) est prévu en-dessous de la partie de dépôt (20), de préférence, l'amplificateur (30) étant entouré par le dispositif de concentration (40) dans la direction radiale et/ou l'amplificateur (30) comprenant une structure de refroidissement, notamment des perçages de refroidissement (32) et/ou des rainures de refroidissement et/ou le dispositif (10) comprenant un dispositif de refroidissement pour l'amplificateur (30) et/ou l'amplificateur (30) étant segmenté et/ou l'amplificateur (30) étant adapté à la forme et la taille des couches (100) et étant notamment rectangulaire ou sensiblement rectangulaire.

13. Dispositif selon l'une des revendications 7 à 12,
**caractérisé en ce que** plusieurs dispositifs de concentration (40), plusieurs parties de dépôt (20) et/ou plusieurs amplificateurs (30) sont prévus qui, chacun, sont adaptés à différents types de couches (100).

14. Dispositif selon l'une des revendications 7 à 13,
**caractérisé en ce que** deux dispositifs de concentration (40), deux parties de dépôt (20) et deux amplificateurs (30) sont prévus, un premier dispositif de concentration (40), une première partie de dépôt (20) et un premier amplificateur (30) étant adaptés à un premier type de couche, notamment à des couches d'anode, et un deuxième dispositif de concentration (40), une deuxième partie de dépôt (20) et un deuxième amplificateur (30) étant adaptés à un deuxième type de couche, notamment à des couches de cathode.

15. Dispositif selon l'une des revendications 7 à 14,
**caractérisé en ce que** ladite au moins une bobine (50, 54) et la partie de dépôt (20) font partie d'un appareillage de manutention destiné au transport et au dépôt des couches (100) et/ou **en ce que** la partie de dépôt (20) est au moins partiellement composé d'un des composants suivants : de la matière synthétique électriquement non conductrice, du matériau composite électriquement non conducteur, de la céramique, du verre, des oxydes de métal électriquement non conducteurs, de la matière synthétique électriquement conductrice, du matériau composite électriquement conducteur, de l'argent, du cuivre, de l'or, du fer, du graphène, des composés d'oxyde de cuivre et/ou **en ce que** la partie de dépôt (20) est segmentée dans la direction verticale et/ou **en ce que** la partie de dépôt (20) est adapté à la forme et aux dimensions des couches (100) et correspond notamment sensiblement à la forme et aux dimensions des couches (100).
